# EUROPÄISCHE PATENTSCHRIFT

(11) **EP 1 050 422 B1**
(45) Veröffentlichungstag und Bekanntmachung des Hinweises auf die Patenterteilung: **15.12.2004**
(21) Anmeldenummer: 00104743.0
(22) Anmeldetag: 04.03.2000
(51) Int. Cl.: B60K 5/12

(54) **Lagerung für ein frontseitig angeordnetes Antriebsaggregat eines Kraftfahrzeugs, insbesondere für einen Geländewagen**
Support for a front drive unit of a motor vehicle, especially for a cross-country vehicle
Logement pour un groupe motopropulseur avant d'un véhicule automobile, notamment pour véhicule tout terrain

(30) Priorität: 03.05.1999 DE 19920052
(43) Veröffentlichungstag der Anmeldung: 08.11.2000
(73) Patentinhaber: Dr.Ing. h.c.F. Porsche Aktiengesellschaft, 70435 Stuttgart (DE)
(72) Erfinder: Hawener, Rainer, 75233 Tiefenbronn (DE); Negowski, Peter, 70437 Stuttgart (DE)

(56) Entgegenhaltungen:
- DE-C- 930 914
- US-A- 3 913 696
- US-A- 5 074 374

## Beschreibung

Die Erfindung bezieht sich auf eine Lagerung für ein frontseitig angeordnetes Antriebsaggregat eines Kraftfahrzeugs, insbesondere für einen Geländewagen nach dem Oberbegriff des Anspruchs 1.

Aus der gattungsbildenden US-PS 5,074,374 ist eine Vierpunktlagerung für ein Antriebsaggregat eines Kraftfahrzeugs an einem Fahrschemel bekannt, wobei der Fahrschemel über elastische Lager am Fahrzeugaufbau befestigt ist. Ein weiteres Lager ist am Getriebegehäuse vorgesehen.

Aufgabe der Erfindung ist es, eine Lagerung für eine Antriebseinheit eines Kraftfahrzeugs bzw. eines Geländewagens zu schaffen, die funktionstrennend unabhängig von einem zugehörigen Fahrschemel weitestgehend schwingungsfrei am Fahrzeugaufbau gehalten und mit dem Fahrschemel als Moduleinheit am Fahrzeugaufbau befestigbar ist und mit der zudem eine zusätzliche Versteifung des Vorderwagens erzielt wird.

Diese Aufgabe wird erfindungsgemäß durch die Merkmale des Anspruchs 1 gelöst. Weitere vorteilhafte Merkmale beinhalten die Unteransprüche.

Das Antriebsaggregat ist oberhalb eines Fahrschemels auf einem separaten Motor-Querträger mittels zweier elastischer Lager über Aufnahmen oder dgl. am Motorgehäuse abgestützt. Ein drittes Lager ist am Getriebegehäuse bzw. am Verteilergetriebegehäuse vorgesehen und stützt sich an einem Getriebe-Querträger ab, der mit Längsträgern verbunden wird.

Die - in Bezug auf die Fahrtrichtung des Fahrzeugs - vornliegenden Befestigungslager des Fahrschemels sind gemeinsam mit dem Motor-Querträger an Längsträgern des Fahrzeugs befestigt. Insbesondere ist dieser Motor-Querträger mit seinen freien Enden starr mit den Längsträgem des Fahrzeugaufbaus verbunden; dagegen ist der Fahrschemel über separate elastische Lager unter Zwischenschaltung des Querträgers an den Längsträgern des Fahrzeugaufbaus gehalten und besitzt eine gewisse elastische Beweglichkeit.

Zur Befestigung des Fahrschemels sowie des Motor-Querträgers wird eine durchgehende Befestigungsschraube verwendet, die im elastischen Lager des Fahrschemels eine erste Abstandshülse, im Motor-Querträger eine zweite Abstandshülse durchdringt und in einer Gewindehülse des Längsträgers festgesetzt wird.

Zur Aufnahme der Motorlager ist an den freien Enden des Motor-Querträgers eine abgestellte Lagerkonsole angebracht, die zudem eine Befestigungsmöglichkeit des Motor-Querträgers an den Längsträgem besitzt. Neben der unmittelbaren Befestigung dieses Querträgers mit seinen freien Enden an den Längsträgern ist somit eine weitere Befestigungsmöglichkeit in einem Längsabstand zur ersteren Befestigung vorgesehen.

Der Motor-Querträger ist zwischen den Längsträgem VZW gekröpft ausgebildet, wobei diese Kröpfung etwa in einer Horizontal-Ebene mit den Querträgern des Fahrschemels liegt, so daß das Motorgehäuse tiefer zu liegen kommt und nicht in seiner Lage behindert wird.

Da der Fahrschemel und der Motor-Querträger in Bezug auf die elastische Lagerung des Fahrschemels getrennt voneinander an den Längsträgern befestigt wird, kann eine Funktionstrennung zwischen Fahrschemellagerung und Motorlagerung erzielt werden, so daß kein Einfluß der unterschiedlichen Aggregatmasse und Anregungen auf den Fahrschemel erfolgen kann. Desweiteren kann ein Fahrschemel für unterschiedliche Motoren verwendet werden, wobei der Querträger an die unterschiedlichen Motoren hinsichtlich der Motorlager anpaßbar ist. Ferner wird über den Motor-Querträger eine Versteifung der Vorderwagenstruktur durch die steife Anbindung an die Längsträger erzielt. Der wesentliche erfinderische Vorteil liegt somit auch darin, daß insbesondere ein optimaler Spielraum für die Anordnung der Motorlager erzielbar ist, indem der Querträger durch einen anderen Querträger mit entsprechender Anordnung der Motorlager ersetzbar ist.

Die Motorlager sind erfindungsgemäß unmittelbar benachbart des Motorgehäuses in einem etwa gleichen Abstand zur Aggregatlängsmittenachse angeordnet. Ein Getriebelager liegt etwa in einer durch die Längsmittenachse gelegten senkrechten Ebene. Insgesamt sind die drei Lager auf einer schräg, nach vom ansteigenden gemeinsamen Ebene angeordnet, wobei diese Ebene unterhalb einer horizontalen Schwerpunktebene liegt. Die Motorlager sind in der Nähe einer vertikalen Schwerpunktebene angeordnet, wobei das Getriebelager in einem großen Abstand zur vertikalen Schwerpunktebene liegt. Das Getriebelager ist insgesamt in einem größeren Abstand zur vertikalen Schwerpunktebene angeordnet als die beiden Motorlager.

Die Anordnung der Motorlager und der Getriebelager sind im wesentlichen so gewählt, daß sich keine wesentlichen Schwingungen vom Antriebsaggregat auf die Karosserie aufbauen können.

Ein Ausführungsbeispiel der Erfindung ist in den Zeichnungen dargestellt und wird im folgenden näher beschrieben.

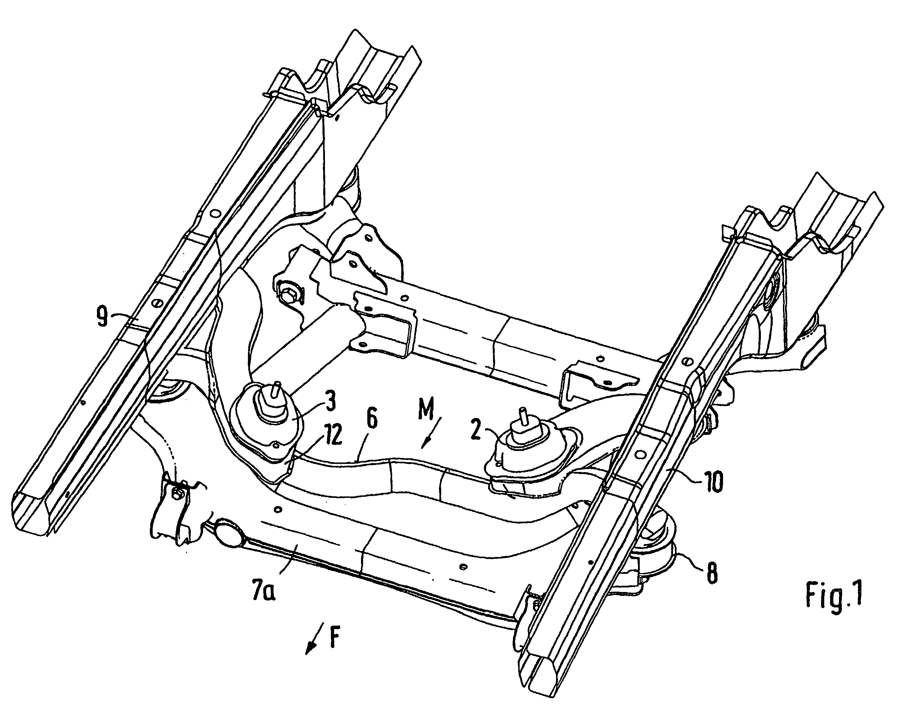

Es zeigen
- Fig. 1: eine schaubildliche Darstellung eines Motor-Querträgers von vorne gesehen,

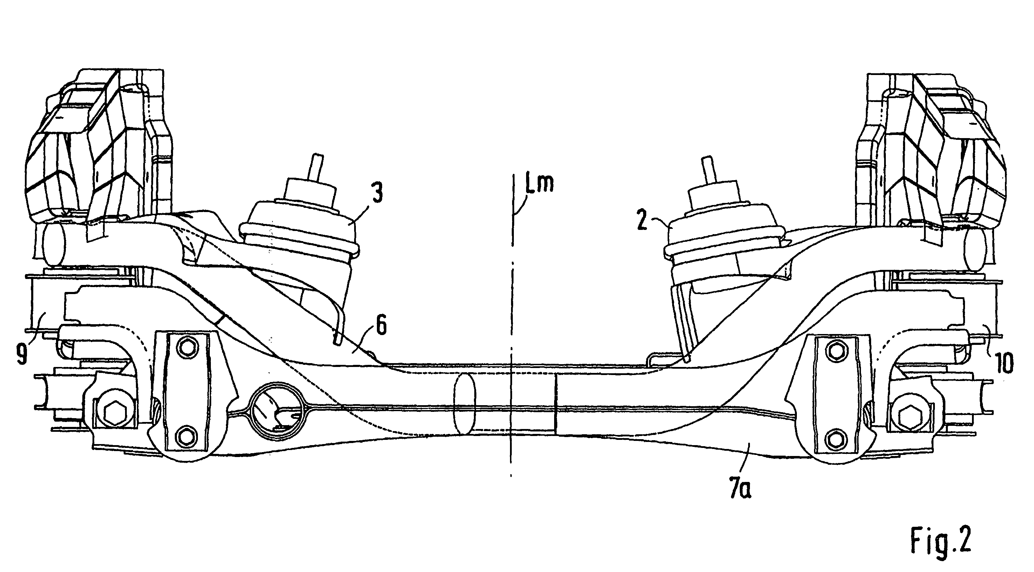

- Fig. 2: Fig. 2 eine Vorderansicht auf ein Antriebsaggregat mit Motorlagerungen gemäß Fig. 1,

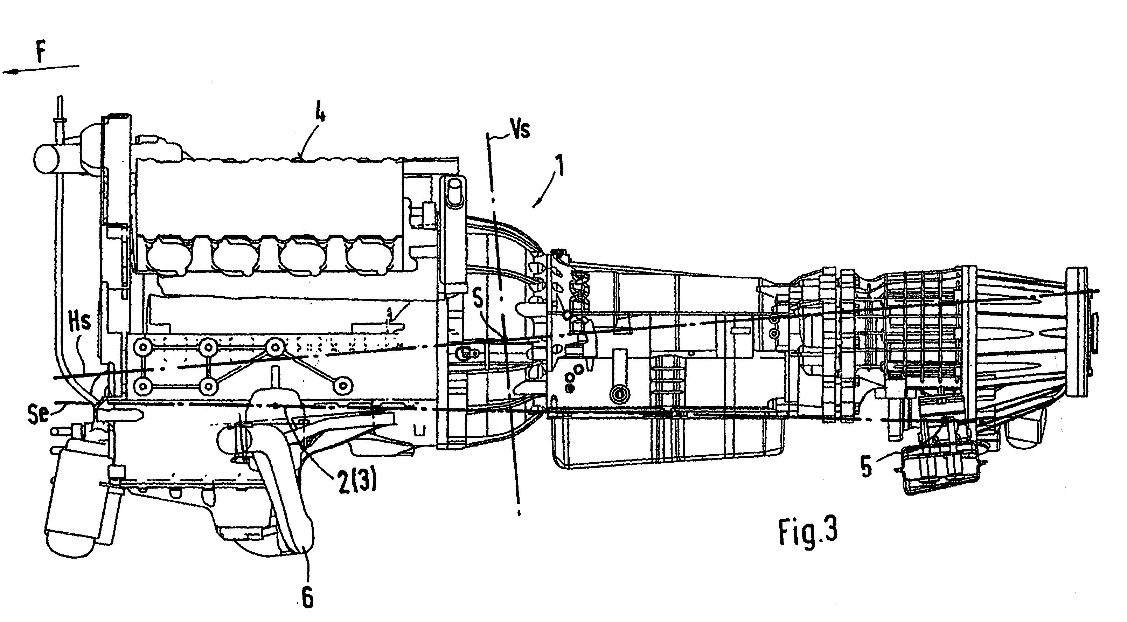

- Fig. 3: eine Seitenansicht auf das Antriebsaggregat mit Motor- und Getriebelager gemäß der Fig. 1 und 2,

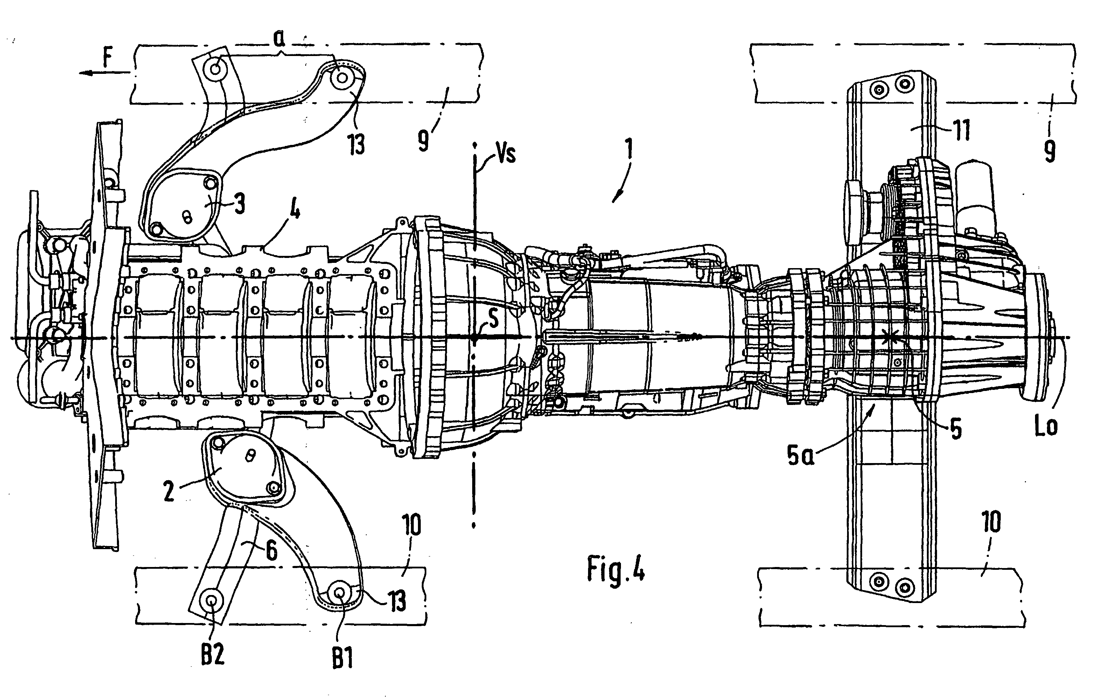

- Fig. 4: eine Draufsicht auf das Antriebsaggregat mit Querträger und Lagerkonsolen für die Motorlager,

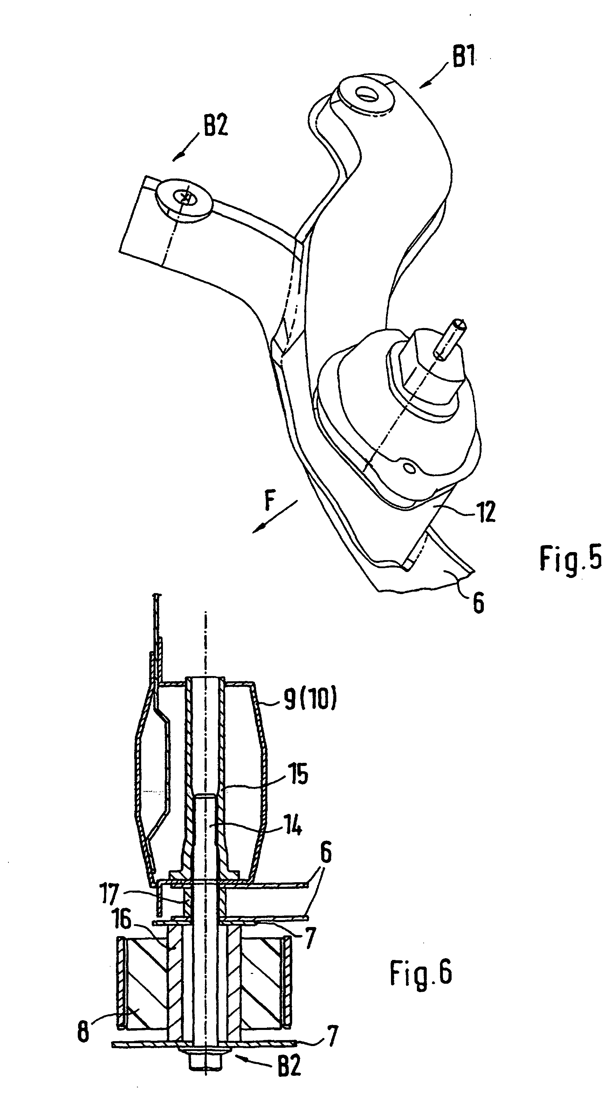

- Fig. 5: eine vergrößerte Darstellung der Lagerkonsolen an dem Motor-Querträger mit Motorlagerungen und Befestigung und
- Fig. 6: einen Querschnitt durch die Befestigung Fahrschemel und Motor-Querträger am Längsträger.

Ein Antriebsaggregat 1 für ein Kraftfahrzeug ist im Vorderwagen des Fahrzeugs angeordnet und über mindestens zwei Motorlager 2, 3 am Motorgehäuse 4 und über mindestens ein Getriebelager 5 am Getriebegehäuse bzw. am Verteiler-Getriebegehäuse 5a zum Fahrzeugaufbau hin abgestützt.

Die Motorlager 2, 3 des Antriebsaggregats 1 sind an einem Motor-Querträger 6 gehalten, der sich teilweise oberhalb eines Fahrschemels 7 erstreckt, an welchem eine Radaufhängung schwenkbar angelenkt ist und der über vier elastische Lager 8 mit dem Fahrzeugaufbau an Längsträgern 9, 10 verbunden ist. Das Getriebelager 5 ist unterhalb des Getriebegehäuses 5a vorgesehen und stützt sich an einem Getriebe-Querträger 11 ab, der endseitig wiederum mit dem Längsträgern 9, 10 verbunden ist.

Der vordere Motor-Querträger 6 ist endseitig jeweils mit einer Lagerkonsole 12 versehen, die jeweils obenseitig ein Motorlager 2, 3 aufnimmt und welche sich nach hinten - in Bezug auf die Fahrtrichtung F - erstreckt und das freie Ende 13 mit jeweils einem Längsträger 9, 10 verbunden ist. Diese Befestigung B1 liegt in einem Längsabstand a zur vorderen Befestigung B2, so daß sich eine genügend große Abstützbasis ergibt.

Die Befestigung B2 des Fahrschemels 7 gemeinsam mit dem Motor-Querträger 6 erfolgt über eine durchgesteckte Befestigungsschraube 14, welche in einer Gewindehülse 15 der Längsträger 9, 10 festgesetzt wird. Damit der Motor-Querträger 6 unbeeinflußt vom elastischen Lager 8 des Fahrschemels 7 bleibt, weist das Lager 8 eine innere erste Abstandshülse 16, der Querträger 6 eine zweite Abstandshülse 17 auf, so daß eine Loslösung vom elastischen Lager 8 erzielt wird und der Motor-Querträger 6 starr mit den Längsträgern 9, 10 über eine eingesetzte Gewindehülse verbunden ist.

Der Motor-Querträger 6 ist im Mittenbereich M gekröpft derart ausgeführt, daß das Motorgehäuse 4 tief gelegt werden kann und sich somit teilweise zwischen den Längsträgern 9, 10 des Fahrzeugaufbaus erstreckt. Die Motorlager 2, 3 sind unmittelbar benachbart des Motorgehäuses 4 und in einem etwa gleichen Abstand zur Aggregatlängsmittenachse Lo angeordnet. Das elastische Getriebelager 5 liegt etwa in einer durch die Längsmittenachse Lo gelegten senkrechten Längsebene Lm.

Insbesondere sind die Motorlager 2, 3 und das Getriebelager unterhalb einer horizontalen Schwerpunktebene Hs und die Motorlager in der Nähe einer vertikalen Schwerpunktebene Vs und etwa mittig des Motorgehäuses 4 - in Längsrichtung gesehen -angeordnet. Das Getriebelager 5 ist in einem größeren Abstand zur vertikalen Schwerpunktebene Vs angeordnet als die beiden Motorlager 2, 3. Desweiteren sind alle drei Lager 2, 3 und 5 auf einer gemeinsamen Schrägebene Se angeordnet, die - in Bezug auf die Fahrtrichtung F - nach vorne ansteigend angeordnet ist. Insbesondere sind zur Erzielung eines möglichst günstigen Schwingungsverhaltens des Antriebsaggregats 1 im Fahrzeugaufbau die Motorlager 2, 3 nahe der horizontalen Schwerpunktebene Hs und etwa mittig des Motorgehäuses 4 in Bezug auf seine Längsachse - schräg zueinander angestellt vorgesehen.

## Patentansprüche

1. Lagerung für ein frontseitig angeordnetes Antriebsaggregat eines Kraftfahrzeugs, insbesondere für einen Geländewagen, wobei die Antriebseinheit in Längsrichtung des Fahrzeugs ausgerichtet und über elastische Lager am Fahrzeugaufbau abgestützt ist, **dadurch gekennzeichnet, daß** das Antriebsaggregat (1) oberhalb eines Fahrschemels (7) über Aufnahmen am Motorgehäuse (4) mittels mindestens zweier elastischer Lager (2, 3) endseitig an einem zwischenliegenden Motor-Querträger (6) abgestützt ist und dieser mit einem - in Fahrtrichtung (F) gesehenen - vornliegenden Fahrschemel-Querträger (7a) gemeinsam von unten her an Längsträgem (9, 10) des Fahrzeugaufbaus über Schrauben (14) befestigbar ist und mindestens ein drittes Lager (5) des Antriebsaggregats (1) am Getriebegehäuse (5a) unterhalb eines Verteilergetriebes vorgesehen ist, das an einem Getriebe-Querträger (11) abgestützt und mit den Längsträgern (9, 10) verbunden ist.

2. Lagerung nach Anspruch 1, **dadurch gekennzeichnet, daß** die beiden elastischen Motorlager (2, 3) unmittelbar benachbart des Motorgehäuses (4) in einem etwa gleichen Abstand zur Aggregatslängsmittenachse (Lo) angeordnet sind und das elastische Getriebelager (5) etwa in einer durch die Längsmittenachse (Lo) verlaufenden senkrechten Längsebene (Lm) liegt und alle drei Lager (2, 3, 5) in einer schräg, nach vorne ansteigenden schrägen Ebene (Se) - in Bezug auf die Fahrtrichtung (F) - liegen.

3. Lagerung nach den Ansprüchen 1 oder 2, **dadurch gekennzeichnet, daß** die Motorlager (2, 3) und das Getriebelager (5) unterhalb einer horizontalen Schwerpunktebene (Hs) und die Motorlager (2, 3) in der Nähe einer vertikalen Schwerpunktebene (Vs) und etwa mittig des Motorgehäuses (4) - in Längsrichtung gesehen - angeordnet sind und das Getriebelager (5) in einem größeren Abstand zur vertikalen Schwerpunktebene (Vs) liegt als die beiden Motorlager (2, 3), welche zueinander dem Motorgehäuse (4) zugeneigt schräg angestellt sind.

4. Lagerung nach den Ansprüchen 1, 2 oder 3, **dadurch gekennzeichnet, daß** der Motor-Querträger (6) an seinen beiden freien Enden jeweils eine abgestellte Lagerkonsole (12) aufweist, an welcher jeweils ein Motorlager (2, 3) befestigt ist und diese jeweils endseitig eine Befestigung (B1) zum Längsträger (9, 10) aufweisen, welche in einem Längsabstand (a) zur weiteren Befestigung (B2) des Motor-Querträgers (6) sowie des Fahrschemels (7) am Fahrzeugaufbau (9, 10) angeordnet ist.

5. Lagerung nach den Ansprüchen 1 oder 4, **dadurch gekennzeichnet, daß** der Motor-Querträger (6) - in Bezug auf die Fahrtrichtung (F) - hinter dem Fahrschemel-Querträger (7a) angeordnet ist und im Mittenbereich (M) eine durchgehende Kröpfung aufweist, und dieser Mittenbereich (M) etwa in einer gemeinsamen Horizontalebene mit dem vorderen Fahrschemel-Querträger (7a) liegt.

6. Lagerung nach den Ansprüchen 1, 4 oder 5, **dadurch gekennzeichnet, daß** der Motor-Querträger (6) starr über eine durch ein elastisches Fahrschemellager (8) durchgeführte Befestigungsschraube (14) mit den Längsträgern (9, 10) des Fahrzeugaufbaus verbunden ist und der Fahrschemel (7) über elastische Lager (8) an den Längsträgern (9, 10) gehalten wird.

7. Fahrschemel nach Anspruch 1, 4, 5 oder 6, **dadurch gekennzeichnet, daß** das elastische Fahrschemellager (8) eine erste Abstandshülse (16), im Motor-Querträger (6) eine zweite Abstandshülse (17) und im Längsträger (9, 10) zum Festsetzen der Befestigungsschraube (14) eine Gewindehülse (15) angeordnet ist.

## Claims

1. A mounting for a drive unit arranged at the front of a motor vehicle, in particular for an off-road vehicle, wherein the drive unit is orientated in the longitudinal direction of the vehicle and is supported on the vehicle body by way of resilient bearings, **characterized in that** the drive unit (1) is supported at the end above a chassis sub-frame (7) on an interposed transverse support (6) of the engine by means of at least two resilient bearings (2, 3) by way of receiving means on the engine housing (4), and the said transverse support (6) of the engine can be fastened from below jointly with a transverse support (7a) of the chassis sub-frame situated in front - as viewed in the direction of travel (**F**) - on longitudinal supports (9, 10) of the vehicle body by way of bolts (14), and at least a third bearing (5) of the drive unit (1) is provided on the gearbox housing (5a) below a distributor gearing which is supported on a transverse support (11) of the gearbox and is connected to the longitudinal supports (9, 10).

2. A mounting according to Claim 1, **characterized in that** the two resilient engine bearings (2, 3) are arranged directly adjacent to the engine housing (4) at a substantially equal distance from the longitudinal central axis (**Lo**) of the unit, and the resilient gearbox bearing (5) is situated substantially in a vertical longitudinal plane (**Lm**) extending through the longitudinal central axis (**Lo**) and all three bearings (2, 3, 5) are situated in an oblique plane (**Se**) ascending obliquely forwards with respect to the direction of travel (**F**).

3. A mounting according to Claims 1 or 2, **characterized in that** the engine bearings (2, 3) and the gearbox bearing (5) are situated below a horizontal centre-of-gravity plane (**Hs**) and the engine bearings (2, 3) are situated in the vicinity of a vertical centre-of-gravity plane (**Vs**) and substantially in the middle of the engine housing (4) as viewed in the longitudinal direction, and the gearbox bearing (5) is situated at a greater distance from the vertical centre-of-gravity plane (**Vs**) than the two engine bearings (2, 3) which are set obliquely to each other at an inclination to the engine housing (4).

4. A mounting according to Claims 1, 2 or 3, **characterized in that** the two free ends of the transverse support (6) of the engine have a respective bearing bracket (12) in each case, on which a respective engine bearing (2, 3) is fastened in each case and the ends of the said engine bearings (2, 3) have a respective fastening means (**B1**) to the longitudinal support (9, 10) in each case, which fastening means (**B1**) is situated at a longitudinal distance (a) from the further fastening means **(B2)** of the transverse support (6) of the engine as well as the chassis sub-frame (7) on the vehicle body (9, 10).

5. A mounting according to Claims 1 or 4, **characterized in that** the transverse support (6) of the engine is situated behind the transverse support (7a) of the chassis sub-frame - with respect to the direction of travel (**F**) - and has a continuous right-angle bend in the central region (**M**), and the said central region (**M**) is situated substantially in a common horizontal plane with the front transverse support (7a) of the chassis sub-frame.

6. A mounting according to Claims 1, 4 or 5, **characterized in that** the transverse support (6) of the engine is connected to the longitudinal supports (9, 10) of the vehicle body in a rigid manner by way of a fastening bolt (14) extending through a resilient bearing (8) of the chassis sub-frame, and the chassis sub-frame (7) is held on the longitudinal supports (9, 10) by way of resilient bearings (8).

7. A mounting according to Claims 1, 4, 5 or 6, **characterized in that** the resilient bearing (8) of the chassis sub-frame [has] a first spacer sleeve (16), and a second spacer sleeve (17) is arranged in the transverse support (6) of the engine and a threaded sleeve (15) is arranged in the longitudinal support (9, 10) in order to fix the fastening bolt (14).

## Revendications

1. Support pour un groupe moteur, disposé à l'avant, d'un véhicule automobile, en particulier pour un véhicule tout terrain, l'unité d'entraînement étant orientée dans la direction longitudinale du véhicule et soutenue sur la carrosserie du véhicule par des paliers élastiques, **caractérisé en ce que** le groupe moteur (1) est soutenu, au-dessus d'un faux-châssis (7), par des logements du carter moteur (4), au moyen d'au moins deux paliers élastiques (2, 3), aux extrémités d'une traverse de moteur (6) située entre eux, et cette dernière peut être fixée, avec une traverse de faux-châssis (7a) située à l'avant - vue dans le sens de marche (F) -,depuis le bas, à des longerons (9, 10) de la carrosserie du véhicule, par des vis (14), et au moins un troisième palier (5) du groupe moteur (1) est prévu sur le carter de la transmission (5a) au-dessous d'une transmission intermédiaire qui est soutenue sur une traverse de transmission (11) et reliée aux longerons (9, 10).

2. Support selon la revendication 1, **caractérisé en ce que** les deux paliers élastiques (2, 3) du moteur sont disposés à proximité immédiate du carter-moteur (4), à peu près à même distance de l'axe médian longitudinal (Lo) du groupe moteur et le palier de transmission (5) élastique se situe à peu près dans un plan longitudinal (Lm) perpendiculaire à l'axe médian longitudinal (Lo), et les trois paliers (2, 3, 5) se situent dans un plan (Se) montant obliquement vers l'avant, par rapport au sens de marche (F).

3. Paliers selon les revendications 1 ou 2, **caractérisés en ce que** les paliers (2, 3) du moteur et le palier de transmission (5) sont disposés au-dessous d'un plan de centre de gravité horizontal (Hs) et les paliers (2, 3) du moteur à proximité d'un plan de centre de gravité vertical (Vs) et approximativement au milieu du carter-moteur (4) - vu dans la direction longitudinale -, et le palier de transmission (5) se situe à une plus grande distance du plan de centre de gravité vertical (Vs) que les deux paliers (2, 3) du moteur qui sont placés obliquement l'un par rapport à l'autre, inclinés vers le carter moteur (4).

4. Support selon les revendications 1, 2 ou 3, **caractérisé en ce que** la traverse de moteur (6) comporte à chacune de ses deux extrémités libres une console pour palier (12) saillante à chacune desquelles est fixé un palier (2, 3) du moteur et qui comportent chacune à leur extrémité une fixation (B1) avec le longeron (9, 10), laquelle fixation est disposée à une distance longitudinale (a) de l'autre fixation (B2) de la traverse de moteur (6) ainsi que du faux-châssis (7) sur la carrosserie (9, 10) du véhicule.

5. Support selon les revendications 1 ou 4, **caractérisé en ce que** la traverse de moteur (6) est disposée - par rapport au sens de marche F - derrière la traverse de faux-châssis (7a) et présente, dans sa zone centrale (M), un coude continu, et cette zone centrale (M) se situe approximativement dans un plan horizontal commun avec la traverse de faux-châssis (7a) avant.

6. Support selon les revendications 1, 4 ou 5, **caractérisé en ce que** la traverse de moteur (6) est reliée rigidement, par une vis de fixation (14) traversant un palier de faux-châssis élastique, aux longerons (9, 10) de la carrosserie du véhicule, et le faux-châssis (7) est maintenu par des paliers élastiques (8) sur les longerons (9, 10).

7. Faux-châssis selon les revendications 1, 4, 5 ou 6, **caractérisé en ce que** dans le palier de faux-châssis (8) élastique est disposée une première douille d'écartement (16), dans la traverse de moteur (6) une deuxième douille d'écartement (17) et dans le longeron (9, 10) une douille filetée (15) pour la fixation de la vis de fixation (14).
